# EUROPEAN PATENT APPLICATION

(11) **EP 4 821 961 A1**
(43) Date of publication of application: **14.10.2026**
(21) Application number: 25169176.2
(22) Date of filing: 08.04.2025
(51) Int. Cl.: C08G 18/00, C08G 18/16, C08G 18/22, C08G 18/28, C08J 11/24, C08L 75/04

(54) **RECYCLING OF POLYURETHANE WASTE TO YIELD HYDROXY- AND EPOXY-GROUP TERMINATED POLYOXAZOLIDINONES**

(71) Applicant: Covestro Deutschland AG, 51373 Leverkusen (DE)
(72) Inventor: Latorre Martinez, Irene Cristina, 40764 Langenfeld (DE); Yogendra, Sivathmeehan, 40211 Düsseldorf (DE); Wolf, Aurel, 42489 Wülfrath (DE); Movahhed, Sohajl, 50829 Köln (DE); Laemmerhold, Kai, 51519 Odenthal (DE); Guertler, Christoph, 50735 Köln (DE); Klein, Patrick, 51063 Köln (DE); Ammenhäuser, Robin, 52223 Stolberg (DE); Woods, Laura, 0604 Titirangi (NZ)
(74) Representative: Levpat

(57) **Abstract**

The invention is related to a process for producing an oxazolidinone composition comprising the reaction of a compound (A) with a compound (B) in the presence of a catalyst (C), wherein the compound (A) contains three or more urethane-groups (A-1) and/or at least one isocyanurate-group (A-2), preferably urethane-groups (A-1), wherein the compound (A) is free of isocyanate groups, and wherein the compound (B) is a mono- or polyepoxide compound (B-1) with two or more epoxy groups and/or glycidol (B-2) and/or glycerol carbonate (B-3).

## Description

The present invention relates to a process for producing an oxazolidinone composition comprising the reaction of a post-consumer processed polyurethane foam containing three or more urethane and/or isocyanurate groups with epoxides or glycerol carbonates to achieve valuable raw materials for new products.

Polyurethane polymers find diverse applications, e.g. in rigid foams for insulation purposes or as flexible foams in mattresses. So far, there are no established processes for the material recycling of such products. WO 2023/099420A1 deals with the recovery of some raw materials from polyurethane flexible foams by chemolysis. WO2023/083968A1 focuses on the recovery by chemolysis of flexible and hard foam polyurethanes. Moreover, WO2023/208946 A1 uses polyisocyanurate containing products as base material for recycling processes by chemolysis. In all these recycling processes, only parts of the raw materials can be recovered, and these reactions must be performed in solvents. Therefore, polyurethane products are often landfilled or incinerated. To improve this situation, a process would be desirable that enables the production of well-defined compounds from polyurethane polymers, so that these can then be used as raw materials for the synthesis of valuable products.

The study underlying the present invention has shown that the reaction of urethane groups with epoxides known from EP3256508B1 and EP3577149B1 can be used to completely degrade high molecular weight polyurethanes. Surprisingly, it has been found that well-defined low molecular weight compounds are formed in the reaction of high molecular weight polyurethanes with epoxides or glycerol carbonate. By selecting suitable epoxides, the type and further functionality of these compounds can be controlled.

Therefore, the problem solved by the present inventions could be defined as the provision of new raw materials for valuable products from post-consumer processed polyurethane products, particularly polyurethane foams. Even highly stable compositions, containing isocyanurate moieties, can be processed by this invention into valuable raw materials again. This problem is solved by the embodiments defined by the claims and in this description below.

In a first embodiment the present invention relates to a process for producing an oxazolidinone composition comprising the reaction of a compound (A) with a compound (B) in the presence of a catalyst (C), wherein the compound (A) contains three or more urethane-groups (A-1) and/or at least one isocyanurate-group (A-2), preferably urethane-groups (A-1), and wherein the compound (A) is free of isocyanate groups, and wherein the compound (B) is a mono- or polyepoxide compound (B-1) with two or more epoxy groups and/or glycerol carbonate (B-3).

As used herein, the term "oxazolidinone" refers to compounds containing at least one oxazolidinone group in the molecule.

The term "hydroxyl-group terminated" oxazolidinone refers to oxazolidinone compounds having at least one, preferably at least two, and more preferably two to three terminal hydroxyl groups, and most preferably two terminal hydroxyl groups.

The term "epoxy-group terminated" oxazolidinone refers to oxazolidinone compounds having at least one, preferably at least two, and more preferably two to three terminal epoxide groups, and most preferably two epoxide groups.

As used herein, the term "oxazolidinone composition" is meant to refer to a composition that comprises the hydroxyl-group terminated oxazolidinone, unreacted glycerol carbonate, if used in stochiometric excess and the solvent (D), if the solvent (D) is present.

The term "polyisocyanate component" refers to all compounds used in the synthesis of the polyurethane which have at least one free isocyanate group. Combined these compounds must have an average isocyanate-functionality of at least 1.8, preferably at least 2.0 and more preferably at least 2.1 isocyanate-groups per molecule, so that the synthesis of a polymer is possible.

All embodiments of the present invention can be combined unless the logical teaching clearly suggests that the embodiments cannot be combined.

In a preferred embodiment of the present invention the catalyst (C) for the process is present in a weight amount of 0.01-20 mol%, preferably of 0.1 to 5 mol%, more preferably ≥ 0.3 to ≤ 4 mol%, based on the total weight of compound (A) and is a Lewis- and/or Bronsted base, preferably a substituted or non-substituted ammonium halide, a substituted or non-substituted phosphonium halide, an amine, a metal hydroxide, a metal carbonate, a metal alkoxide, a metal acetate, a metal formiate, a metal molybdate, a metal vanadate and/or a metal phosphate;

In a more preferred embodiment, the catalyst (C) comprises at least one compound selected from the group consisting of a tetraalkylphosphonium halogenide, a tetracycloalkylphosphonium halogenide, a tetraarylphosphonium halogenide, a tetraalkylammonium halogenide, a tetracycloalkylammonium halogenide, a tetraarylammonium halogenide, and
at least one compound represented by the formula (I)

[A]n+[Y]n- (I)

Wherein [A]n+ is at least one compound selected from the group consisting of p-phenoltriphenyl-phosphonium; p-phenoltriphenyl-ammonium; p-chlorobenzene triphenyl-phosphonium; ethylammonium; methyltrioctyl-ammonium; cholin; 1-allyl-3-methyl- imidazolium; 1-butyl-2,3-dimethyl- imidazolium; 1-butyl-3-methyl- imidazolium; 1,2-dimethyl-3-propyl- imidazolium; 1,3-dimethyl- imidazolium; 1-ethyl-3-methyl- imidazolium; 1-hexadecyl-3-methyl- imidazolium; 1-hexyl-3-methyl- imidazolium; 1-methyl-3-octyl- imidazolium;1-methyl-3-propyl- imidazolium; trihexyltetradecyl- phosphonium; 1-methyl-1-propyl piperidinium; 1-butyl-pyridinium; 1-butyl-3-methyl-pyridinium; 1-butyl-4-methyl- pyridinium; 1-butyl-1-methyl- pyrrolidinium; 1-methyl-1-propyl- pyrrolidinium; triethyl-sulfonium;Li(I), Na(I), K(I), Rb(I), Cs(I), Ag(I), Au(I), Be(II), Mg(II), Ca(II), Sr(II), Ba(II), Dy(II), Yb(II), Cu(II), Zn(II), V(II), Mo(II), Mn(II), Fe(II), Co(II) Ni(II), Pd(II), Pt(II), Ge(II), Sn(II), Sc(III), Y(III), La(III), Ce(III), Pr(III), Nd(III), Sm(III), Eu(III), Gd(III), Tb(III), Dy(III), Ho(III), Er(III), Tm(III), Yb(III), Lu(III), Hf(III), Nb(III), Ta(III), Cr(III), Ru(III), Os(III), Rh(III), Ir(III), Al(III), Ga(III), In(III), Tl(III), Ge(III), Ce(IV), Ti(IV), Zr(IV), Hf(IV), Nb(IV), Mo(IV), W(IV), Ir(IV), Pt(IV), Sn(IV), Pb(IV), Nb(V), Ta(V), Bi(V), Mo(VI), and W(VI);

Wherein [Y]n- is at least one compound selected from the group consisting of bis(trifluoromethylsulfonyl)imide; iodide; bromide; chloride; dicyanamide; diethyl phosphate; dihydrogen phosphate; dimethyl phosphate; ethyl sulfate; hexafluorophosphate; hydrogensulfate; nitrate; tetrafluoroborate; thiocyanate; and triflate.

Even more preferably the catalyst (C) is at least one compound selected from the group consisting of LiCl, LiBr, LiI, K2CO3, MgCl2, MgBr2, MgI2, tetramethylammonium bromide, tetraethylammonium bromide, tetrapropylammonium bromide, tetrabutylammonium bromide, tetrapentylammonium bromide, , tetrahexylammonium bromide, , tetraheptylammonium bromide, , tetraoctylammonium bromide, tetramethylammonium chloride, tetraethylammonium chloride, tetrapropylammonium chloride, tetrabutylammonium chloride, tetrapentylammonium chloride, tetrahexylammonium chloride, , tetraheptylammonium chloride, tetraoctylammonium chloride, tetraphenylphosphonium chloride, tetraphenylphosphonium bromide, tetraphenylphosphonium iodide, bis(triphenylphosphine)iminium chloride, tetraphenylphosphonium nitrate, ,tetraphenylphosphonium carbonate;

Most preferably the catalyst (C) is at least one compound selected from the group consisting of tetraphenylphosphonium chloride, tetraphenylphosphonium bromide, tetraphenylphosphonium iodide and K2CO3.

In another preferred embodiment the compound (A) is a foam or a compact material.

The compound (A) may be a thermoplastic, a duroplastic or an elastomeric material.

In a preferred embodiment the compound (A) is a rigid, elastic or viscoelastic foam. As used in the present application, the term "foam" refers to a material which based on its total volume consists to 5 to 80 vol.-%, preferably 10 to 70 vol.-%, more preferably 15 to 50 vol.-% of air or any other gas or mixture of gases.

In another preferred embodiment the compound (A) is a compact material, and the compact material is a thermoplastic polyurethane or a polyurethane elastomer. As used in the present application, the term "compact material" refers to a material which based on its total volume consists of not more than 4 vol.-%, preferably not more than 3 vol.-% and more preferably not more than 1 vol.-% of air, or any other gas or mixture of gases.

In a preferred embodiment the compound (A) is a polyester polyurethane or a polyether polyurethane or a mixture of both.

In another preferred embodiment the compound (A) is a polycarbonate polyurethane.

Polyurethanes are polymers obtained or obtainable by reaction of a polyisocyanate component with a polyol component.

The term "polyol component" refers to all compounds used in the synthesis of the polyurethane which have at least one free hydroxyl group. Combined these compounds must have an average OH-functionality of at least 1.8, preferably at least 2.0 and more preferably at least 2.1 OH-groups per molecule so that the synthesis of a polymer is possible.

With regards to the polyol component, polyurethanes are preferred that are based on a polyol component comprising at least compound selected from the group consisting of a polyether polyol, a polyester polyol, a polyether ester polyol, a polyether carbonate polyol, a polyacrylate polyol, and mixtures of two or more of the aforementioned polyols. Preferably, the polyol component contains a polyether polyol. Preferably, each of the aforementioned compounds has an OH-functionality of at least 2. It is particularly preferred that the polyol component based on its total weight consists of at least 90 wt.-%, more preferably at least 95 wt.-% and most preferably at least 98 wt.-% of one or more polyether polyols. The polyether polyol can also be one that is filled with a styrene-acrylonitrile copolymer (SAN copolymer).

The polyisocyanate component of a polyurethane may comprise aromatic, cycloaliphatic, aliphatic polyisocyanates or a mixture of these polyisocyanates. The aforementioned polyisocyanates can be diisocyanates, oligomeric isocyanates, polymeric isocyanates.

Preferably, the polyisocyanate component may comprise aliphatic, cycloaliphatic and/or araliphatic or aromatic polyisocyanates. More preferably, the polyisocyanate component comprises of an aliphatic polyisocyanate compound. Even more preferably, the polyisocyanate component based on its total weight consists of at least 90 wt.-%, more preferably at least 95 wt.-% and most preferably at least 98 wt.-% of aliphatic polyisocyanates.

In an embodiment of the method according to the invention, the polyisocyanate component is at least one polyisocyanate accessible in various ways, for example by phosgenation in the liquid or gas phase or by a phosgene-free route, for example by thermal urethane cleavage.

In a preferred embodiment of the method according to the invention, the polyisocyanate component comprises at least one compound selected from the group consisting of polyisocyanates having a molecular weight range between 140 g/mol and 600 g/mol and having aliphatically, cycloaliphatically, araliphatically and/or aromatically bonded isocyanate groups. Preferred are 1,4-diisocyanatobutane, 1,5-diisocyanatopentane (pentamethylene diisocyanate, PDI), 1,6-diisocyanatohexane (hexamethylene diisocyanate, HDI), 2-methyl-1,5-diisocyanatopentane, 1,5-diisocyanato-2,2-dimethylpentane, 2,2,4- or 2,4,4-trimethyl-1,6-diisocyanatohexane, 1,8-diisocyanatooctane, 1,10-diisocyanatodecane, 1,12-diisocyanatododecane, 1,3- and 1,4-diisocyanatocyclohexane, 1,3- and 1,4-bis(isocyanatomethyl)cyclohexane, 1-isocyanato-3,3,5-trimethyl-5-isocyanatomethylcyclohexane (isophorone diisocyanate, IPDI), 2,4'- and 4,4'-diisocyanatodicyclohexylmethane (H12-MDI), 4,4'-diisocyanato-2,2-dicyclohexyl propane, 1-isocyanato-1-methyl-4(3)isocyanatomethylcyclohexane, bis(isocyanatomethyl)norbomane, or any polyisocyanates having uretdione, isocyanurate, allophanate, biuret, iminooxadiazinedione and/or oxadiazinetrione structure, prepared by modification of simple aliphatic and/or cycloaliphatic diisocyanates, for example those of the type mentioned above, as described for example in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 and DE-A 3 928 503 or in EP-A 0 336 205, EP-A 0 339 396 and EP-A 0 798 299 or by mixtures of at least two such polyisocyanates, and 1,3- and 1,4-bis(isocyanatomethyl)benzene (xylylene diisocyanate, XDI), 1,3- and 1,4-bis(2-isocyanatopropan-2-yl)benzene (tetramethylxylylene diisocyanate, TMXDI), 1,3-bis(isocyanatomethyl)-4-methylbenzene, 1,3-bis(isocyanatomethyl)-4-ethylbenzene, 1,3-bis(isocyanatomethyl)-5-methylbenzene, 1,3bis(iscyanatomethyl)-2,4,6-trimethlybenzene, 1,3-bis(isocyanatomethyl)-4,5-dimethylbenzene, 1,4-bis(isocyanatomethyl)-2,5-dimethylbenzene, 1,4-bis(isocyanatomethyl)-2,3,5,6-tetramethylbenzene, 1,3-bis(isocyanatomethyl)-5-tert-butylbenzene, 1,3-bis(isocyanatomethyl)-4-chlorobenzene, 1,3-bis(isocyanatomethyl)-4,5-dichlorobenzene, 1,3-bis(isocyanatomethyl)-2,4,5,6-tetrachlorobenzene, 1,4-bis(isocyanatomethyl)-2,3,5,6-tetrachlorobenzene, 1,4-bis(isocyanatomethyl)-2,3,5,6-tetrabromobenzene, 1,4-bis(2-isocyanatoethyl)benzene and 1,4-bis(isocyanatomethyl)naphthalene, 1,2-, 1,3- and 1,4-diisocyanatobenzene (phenylene diisocyanate), 2,4- and 2,6-diisocyanatotoluene (toluene diisocyanate, TDI), 2,3,5,6-tetramethyl-1,4-diisocyanatobenzene, the isomeric diethylphenylene diisocyanates, diisopropylphenylene diisocyanates, diisododecylphenylene diisocyanates and biphenyl diisocyanates, 3,3'-dimethoxybiphenyl-4,4'-diisocyanate, 2,2'-, 2,4'- and 4,4'-diisocyanatodiphenylmethane (MDI), 3,3'-dimethyl diphenylmethane-4,4'-diisocyanate, 4,4'-diisocyanatodiphenylethane, 1,5-diisocyanatonaphthalene (NDI), diphenylether diisocyanate, ethylene glycol diphenylether diisocyanate, diethylene glycol diphenylether diisocyanate, 1,3-propylene glycol diphenylether diisocyanate, benzophenone diisocyanate, triisocyanatobenzene, 2,4,6-triisocyanatotoluene, trimethylbenzene triisocyanate, diphenylmethane-2,4,4'-triisocyanate, 3-methyldiphenylmethane-4,6,4'-triisocyanate, the isomeric naphthalene triisocyanates and methylnaphthalene diisocyanates, triphenylmethane triisocyanate, 2,4-diisocyanato-1-[(5-isocyanato-2-methylphenyl)methyl]benzene, 4-methyl-diphenylmethane-3,5,2',4',6'-pentaisocyanate, and also the polynuclear homologues of diisocyanatodiphenylmethane known as "polymer-MDI", and also the polyisocyanates having urethane and/or isocyanurate structures obtainable from monomeric 2,4- and/or 2,6-TDI by reaction with polyols and/or oligomerization, preferably trimerization, which are obtainable by any known methods, described for example in DE-A 870 400, DE-A 953 012, DE-A 1 090 196, EP-A 0 546 399, CN 105218780, CN 103881050, CN 101717571, US 3 183 112, EP-A 0 416 338, EP-A 0 751 163, EP-A 1 378 529, EP-A 1 378 530, EP-A 2 174 967, JP 63260915 or JP 56059828 or are mixtures of at least two such polyisocyanates, and also those polyisocyanate compounds bearing both aromatic and aliphatic isocyanate groups, for example the mixed trimers or allophanates of 2,4- and/or 2,6-TDI with HDI described in DE-A 1 670 667, EP-A 0 078 991, EP-A 0 696 606 and EP-A 0 807 623.

More preferably, the polyisocyanate is selected from the group consisting of 1,5-diisocyanatopentane (pentamethylene diisocyanate, PDI), 1,6-diisocyanatohexane (hexamethylene diisocyanate, HDI), 1-isocyanato-3,3,5-trimethyl-5-isocyanatomethylcyclohexane (isophorone diisocyanate, IPDI), 2,4'- and 4,4'-diisocyanatodicyclohexylmethane (H12-MDI), and 1,3- and 1,4-bis(isocyanatomethyl)benzene (xylylene diisocyanate, XDI), 1,3- and 1,4-bis(2-isocyanatopropan-2-yl)benzene (tetramethylxylylene diisocyanate, TMXDI), 2,2'-, 2,4'- and 4,4'-diisocyanatodiphenylmethane (MDI), 3,3'-dimethyl diphenylmethane-4,4'-diisocyanate, 4,4'-diisocyanatodiphenylethane, 1,5-diisocyanatonaphthalene (NDI), mixtures of the aforementioned polyisocyanates and oligomeric polyisocyanates derived from the aforementioned compounds.

As used herein, the term "aliphatic polyisocyanate compound" refers to compounds having two or more isocyanate groups and no aromatic moieties.

As used herein, the term "aromatic polyisocyanate compound" refers to compounds having two or more isocyanate groups and aromatic moieties.

In one preferred embodiment of the method according to the invention the polyisocyanate component comprises an aliphatic or cycloaliphatic polyisocyanate.

Even more preferably, the polyisocyanate is selected from the group consisting of 1,4-diisocyanatobutane, 1,5-diisocyanatopentane (pentamethylene diisocyanate, PDI), 1,6-diisocyanatohexane (hexamethylene diisocyanate, HDI), 2-methyl-1,5-diisocyanatopentane, 1,5-diisocyanato-2,2-dimethylpentane, 2,2,4- or 2,4,4-trimethyl-1,6-diisocyanatohexane, 1,8-diisocyanatooctane, 1,10-diisocyanatodecane, 1,12-diisocyanatododecane, 1,3- and 1,4-diisocyanatocyclohexane, 1,3- and 1,4-bis(isocyanatomethyl)cyclohexane, 1-isocyanato-3,3,5-trimethyl-5-isocyanatomethylcyclohexane (isophorone diisocyanate, IPDI), 2,4'- and 4,4'-diisocyanatodicyclohexylmethane (H12-MDI), 4,4'-diisocyanato-2,2-dicyclohexyl propane, 1-isocyanato-1-methyl-4(3)isocyanatomethylcyclohexane, bis(isocyanatomethyl)norbornane, mixtures of the aforementioned polyisocyanates and oligomeric polyisocyanates derived from the aforementioned compounds.

Most preferably, the polyisocyanate is selected from the group consisting of 1,4-diisocyanatobutane, 1,5-diisocyanatopentane (pentamethylene diisocyanate, PDI), 1,6-diisocyanatohexane (hexamethylene diisocyanate, HDI), 1,5-diisocyanato-2,2-dimethylpentane, 2,2,4- or 2,4,4-trimethyl-1,6-diisocyanatohexane, 1,8-diisocyanatooctane, 1,3- and 1,4-diisocyanatocyclohexane, 1,3- and 1,4-bis(isocyanatomethyl)cyclohexane, 1-isocyanato-3,3,5-trimethyl-5-isocyanatomethylcyclohexane (isophorone diisocyanate, IPDI), 2,4'- and 4,4'-diisocyanatodicyclohexylmethane (H12-MDI), 4,4'-diisocyanato-2,2-dicyclohexyl propane, mixtures of the aforementioned polyisocyanates and oligomeric polyisocyanates derived from the aforementioned compounds.

And in a particularly preferred embodiment, the polyisocyanate component comprises at least one aliphatic polyisocyanate selected from the group consisting of 1,5-diisocyanatopentane (pentamethylene diisocyanate, PDI), 1,6-diisocyanatohexane (hexamethylene diisocyanate, HDI), 1-isocyanato-3,3,5-trimethyl-5-isocyanatomethylcyclohexane (isophorone diisocyanate, IPDI), 2,4'- and 4,4'-diisocyanatodicyclohexylmethane (H12-MDI), mixtures of the aforementioned polyisocyanates and oligomeric polyisocyanates derived from the aforementioned compounds.

In another preferred embodiment of the method according to the invention the polyisocyanate compound is an aromatic and/or araliphatic polyisocyanate compound.

Such polyisocyanates are preferably select from the list consisting of 1,3- and 1,4-bis(isocyanatomethyl)benzene (xylylene diisocyanate, XDI), 1,3- and 1,4-bis(2-isocyanatopropan-2-yl)benzene (tetramethylxylylene diisocyanate, TMXDI), 1,3-bis(isocyanatomethyl)-4-methylbenzene, 1,3-bis(isocyanatomethyl)-4-ethylbenzene, 1,3-bis(isocyanatomethyl)-5-methylbenzene, 1,3bis(iscyanatomethyl)-2,4,6-trimethlybenzene, 1,3-bis(isocyanatomethyl)-4,5-dimethylbenzene, 1,4-bis(isocyanatomethyl)-2,5-dimethylbenzene, 1,4-bis(isocyanatomethyl)-2,3,5,6-tetramethylbenzene, 1,3-bis(isocyanatomethyl)-5-tert-butylbenzene, 1,3-bis(isocyanatomethyl)-4-chlorobenzene, 1,3-bis(isocyanatomethyl)-4,5-dichlorobenzene, 1,3-bis(isocyanatomethyl)-2,4,5,6-tetrachlorobenzene, 1,4-bis(isocyanatomethyl)-2,3,5,6-tetrachlorobenzene, 1,4-bis(isocyanatomethyl)-2,3,5,6-tetrabromobenzene, 1,4-bis(2-isocyanatoethyl)benzene and 1,4-bis(isocyanatomethyl)naphthalene, 1,2-, 1,3- and 1,4-diisocyanatobenzene (phenylene diisocyanate), 2,4- and 2,6-diisocyanatotoluene (toluene diisocyanate, TDI), 2,3,5,6-tetramethyl-1,4-diisocyanatobenzene, the isomeric diethylphenylene diisocyanates, diisopropylphenylene diisocyanates, diisododecylphenylene diisocyanates and biphenyl diisocyanates, 3,3'-dimethoxybiphenyl-4,4'-diisocyanate, 2,2'-, 2,4'- and 4,4'-diisocyanatodiphenylmethane (MDI), 3,3'-dimethyl diphenylmethane-4,4'-diisocyanate, 4,4'-diisocyanatodiphenylethane, 1,5-diisocyanatonaphthalene (NDI), diphenylether diisocyanate, ethylene glycol diphenylether diisocyanate, diethylene glycol diphenylether diisocyanate, 1,3-propylene glycol diphenylether diisocyanate, benzophenone diisocyanate, triisocyanatobenzene, 2,4,6-triisocyanatotoluene, trimethylbenzene triisocyanate, diphenylmethane-2,4,4'-triisocyanate, 3-methyldiphenylmethane-4,6,4'-triisocyanate, the isomeric naphthalene triisocyanates and methylnaphthalene diisocyanates, triphenylmethane triisocyanate, 2,4-diisocyanato-1-[(5-isocyanato-2-methylphenyl)methyl]benzene, 4-methyl-diphenylmethane-3,5,2',4',6'-pentaisocyanate, and also the polynuclear homologues of diisocyanatodiphenylmethane known as "polymer-MDI", and also the polyisocyanates having urethane and/or isocyanurate structures obtainable from monomeric 2,4- and/or 2,6-TDI by reaction with polyols and/or oligomerization, preferably trimerization, which are obtainable by any known methods, described for example in DE-A 870 400, DE-A 953 012, DE-A 1 090 196, EP-A 0 546 399, CN 105218780, CN 103881050, CN 101717571, US 3 183 112, EP-A 0 416 338, EP-A 0 751 163, EP-A 1 378 529, EP-A 1 378 530, EP-A 2 174 967, JP 63260915 or JP 56059828 or are mixtures of at least two such polyisocyanates, and also those polyisocynanate compounds bearing both aromatic and aliphatic isocyanate groups, for example the mixed trimers or allophanates of 2,4- and/or 2,6-TDI with HDI described in DE-A 1 670 667, EP-A 0 078 991, EP-A 0 696 606 and EP-A 0 807 623.

More preferably, the aromatic and/or araliphatic polyisocyanate compound is at least one compound selected from the group consisting of 1,3- and 1,4-bis(isocyanatomethyl)benzene (xylylene diisocyanate, XDI), 1,3- and 1,4-bis(2-isocyanatopropan-2-yl)benzene (tetramethylxylylene diisocyanate, TMXDI), 2,2'-, 2,4'- and 4,4'-diisocyanatodiphenylmethane (MDI), 3,3'-dimethyl diphenylmethane-4,4'-diisocyanate, 4,4'-diisocyanatodiphenylethane, 1,5-diisocyanatonaphthalene (NDI). A mixture of two or more of the aromatic polyisocyanate compounds can also be used.

In another embodiment the compound (A) comprises at least three isocyanurate groups.

The characteristic cyclic isocyanurate structural unit is shown in the following structural formula:

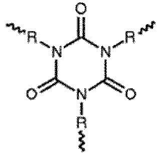

Isocyanurates and polyisocyanurates can be obtained by cyclotrimerization of polyisocyanates. The conventionally operated cyclotrimerization proceeding from monomeric diisocyanates is a strongly exothermic reaction. This can considerably restrict the use options and the levels of trimerization that are still achievable industrially and efficiently.

In one embodiment of the present invention the compound (B) is a polyepoxide compound (B-1).

As used herein, the term "polyepoxide compound" refers to compounds having two or more epoxide groups.

Preferably, the at least one polyepoxide compound (B-1) is selected from the group consisting of aliphatic linear polyepoxide compounds, aliphatic branched polyepoxide compounds and aromatic polyepoxide compounds. In a preferred embodiment the at least one polyepoxide compound (B-1) is at least one aliphatic linear polyepoxide compound and/or at least one aliphatic branched polyepoxide compound.

As used herein, the term "aliphatic linear polyepoxide compound" refers to compounds having two or more epoxide groups and also aliphatic linear moieties.

As used herein, the term "aliphatic branched polyepoxide compound" refers to compounds having two or more epoxide groups and also aliphatic branched moieties.

As used herein, the term "aromatic polyepoxide compound" refers to compounds having two or more epoxide groups and also aromatic moieties.

Polyepoxide compounds (B-1) which are suitable for use in the method according to the invention are neopentyl glycol diglycidyl ether, hydrogenated bisphenol A diglycidyl ether, 1,4-cyclohexane dicarboxylic acid diglycidyl ester, ethylene glycol diglycidyl ether, polyethylene glycol diglycidyl ether, diethylene glycol diglycidyl ether, propylene glycol diglycidyl ether, dipropylene glycol diglycidyl ether, polypropylene glycol diglycidyl ether, glycerol triglycidyl ether, polyglycerol polyglycidyl ether, polyglycidyl ether of ethoxylated trimethylolpropane, poly(tetramethylene-oxid) diglycidyl ether, pentaeritrol polyglycidyl ether, vinylcyclohexene diepoxide, the diepoxides of double unsaturated fatty acid C1 - C18 alkyl esters, polyepoxides of double unsaturated ethoxylated fatty alcohols, Aliphatic di- or polydiglycidyl ether, derived via epoxidation of di- or polyfunctional alcohols with aliphatic linear, aliphatic branched, or cycloaliphatic moieties consisting of 2-40 carbon atoms, for example ethanediol diglycicyl ether, propanediol diglycidyl ether, 1,4-butanediol diglycidyl ether, 1,6-hexanediol diglycidyl ether, octanediol diglycidyl ether, trimethylolpropane polyglycidyl ether, glycerol polyethylene triglycidyl ether, 2-ethyl hexyl diglycidyl ether, isosorbide diglycidyl ether, resorcinol diglycidyl ether, bisphenol A diglycidyl ether, bisphenol-F diglycidyl ether, bisphenol-S diglycidyl ether, 9,9-bis(4-glycidyloxy phenyl)fluorine, tetrabromo bisphenol A diglycidyl ether, tetrachloro bisphenol A diglycidyl ether , tetramethyl bisphenol A diglycidyl ether, tetramethyl bisphenol-F diglycidyl ether, tetramethyl bisphenol-S diglycidyl ether, diglycidyl terephthalate, diglycidyl o-phthalate, trimellitic acid triglycidyl ester, 1,4-cyclohexane dicarboxylic acid diglycidyl ester, 2-dihydroxybenzene diglycidyl ether, 1,4-dihydroxybenzene diglycidyl ether, 4,4'-(3,3,5-trimethylcyclohexyliden)bisphenyl diglycidyl ether, diglycidyl isophthalate, tetrabromobisphenol A, cardanol-based diglycidyl ether, Hydrochinone diglycidyl ether, 4,4'-dihydroxyphenyl diglycicdyl ether, Bis-(4-hydroxyphenyl)-1,1-ethane diglycidyl ether, Bis-(4-hydroxyphenyl)-1,1-isobutane digylcidyl ether, Bis-(4-hydroxyphenyl) ether digylcidyl ether, as well as chlorinated and brominated varieties of the aforementioned components.

Preferably the at least one polyepoxide compound (B-1) is selected from the group consisting of hydrogenated bisphenol A diglycidyl ether, polyethylene glycol diglycidyl ether, polypropylene glycol diglycidyl ether, glycerol triglycidyl ether, polyglycidyl ether of ethoxylated trimethylolpropane, poly(tetramethylene-oxid) diglycidyl ether, pentaeritrol polyglycidyl ether, the diepoxides of double unsaturated fatty acid C1 - C18 alkyl estersAliphatic di- or polydiglycidyl ether, derived via epoxidation of di- or polyfunctional alcohols with aliphatic linear, aliphatic branched, or cycloaliphatic moieties consisting of 2-40 carbon atoms, for example ethanediol diglycicyl ether, 1,4-butanediol diglycidyl ether, 1,6-hexanediol diglycidyl ether, trimethylolpropane polyglycidyl ether, glycerol polyethylene triglycidyl ether, 2-ethyl hexyl diglycidyl ether, isosorbide diglycidyl ether, bisphenol A diglycidyl ether, bisphenol-F diglycidyl ether, bisphenol-S diglycidyl ether, tetramethyl bisphenol A diglycidyl ether, tetramethyl bisphenol-F diglycidyl ether, tetramethyl bisphenol-S diglycidyl ether, diglycidyl terephthalate, diglycidyl o-phthalate, 2-dihydroxybenzene diglycidyl ether, 1,4-dihydroxybenzene diglycidyl ether, 4,4'-(3,3,5-trimethylcyclohexyliden)bisphenyl diglycidyl ether, diglycidyl isophthalate, cardanol-based diglycidyl ether, Hydrochinone diglycidyl ether, 4,4'-dihydroxyphenyl diglycicdyl ether, Bis-(4-hydroxyphenyl)-1,1-ethane diglycidyl ether, Bis-(4-hydroxyphenyl)-1,1-isobutane digylcidyl ether and Bis-(4-hydroxyphenyl) ether digylcidyl ether.

More preferably, the at least one polyepoxide compound (B-1) is selected from the group consisting of ethanediol diglycidyl ether, butanediole diglycidyl ether, hexanediol diglycidyl ether, trimethylopropane triglycidyl ether, bisphenol A diglycidyl ether, bisphenol-F diglycidyl ether, bisphenol-S diglycidyl ether, 2-dihydroxybenzene diglycidyl ether, 1,4-dihydroxybenzene diglycidyl ethe and, diglycidyl isophthalate.

Most preferably, the at least one polyepoxide compound (B-1) is selected from the group consisting of ethanediol diglycidyl ether, butanediole diglycidyl ether, hexanediol diglycidyl ether and trimethylopropane triglycidyl ether. In another embodiment the compound (B) is glycidol (B-2) and/ or glycerol carbonate (B-3).

In a preferred embodiment the compound (A) and the compound (B) were used in a molar ratio between 1 to 2, more preferably 1 to 1.2.

It is preferred that the polyoxazolidinone resulting from the method of the present invention has an average molecular weight between 300-2000 g/mol.

In another preferred embodiment the product is a hydroxyl-group-terminated polyoxazolidinone.

In another preferred embodiment the hydroxyl-terminated polyoxazolidinone has a molar ratio of the 4-hydroxymethyl substituted 1,3-oxazolidin-2-one regioisomer to the 5-hydroxymethyl substituted 1,3-oxazolidin-2-one regioisomer is > 0,01 to 1 to ≤100,0 to 1, preferably ≥ 0,1 to ≤20,0 to 1 and more preferably ≥ 0,2 to 1 to ≤5,0 to 1.

Preferably, the reaction is carried out at a reaction temperature of 160-220°C, more preferably 160-190°C.

It is preferred, that the reaction is carried out until the peak signal of the IR spektrum, which is measured as described in the examples, for the isocyanurate at 1710-1715 cm-1 and/or carbamate at 1680-1730 cm-1 is reduced by 90 % of the end reaction product signal compared to the start of the reaction, preferably is reduced by 95% of the end reaction product signal compared to the start of the reaction and most preferably is reduced by 98% of the end reaction product signal compared to the start of the reaction.

In yet another embodiment the present invention relates to polyoxazolidinone obtained or obtainable by the process disclosed above.

Thus, all definition given above for the process also apply to this embodiment.

In yet another embodiment of the present invention, the present invention relates to the use of the polyoxazolidinone obtained or obtainable by the method of the present invention for the synthesis of a compound selected from the group consisting of epoxides, polyurethanes, polycarbonates, polyester phthalates and acrylates, preferably epoxides, polyurethanes and polycarbonates, and most preferably epoxides and polyurethanes.

Any of these uses is based on the reactivity of the terminal hydroxyl groups which enable chemical reactions as for any other polyol.

Thus, the present invention provides polyoxazolidinones obtained from waste which can be used as novel and structurally well-defined building blocks in the synthesis of new materials, particularly new polymers.

The examples given below are merely intended to illustrate the present invention. They shall not limit the scope of the claims in any way.

### Examples

### Material and methods

### Compound (A)

| | |
|---|---|
| A-I: | TPU, Desmopan 9395U |
| A-II: | RF, TI-3610 |
| A-III: | PIR foam, Desmodur 44V 70L |

### Compound (B)

For the calculation of the experimental molar ratios, a compound purity of 100 % was assumed for the compound. Possible impurities e.g., alcoholic compounds were neglected for the calculations.

| | |
|---|---|
| B-I: | BDDE butanedioldiglycidylether |
| B-III: | Glycerol carbonate |

### Catalyst (C)

| | |
|---|---|
| C-I: | K2CO3, purity 99%, Sigma Aldrich |
| C-II: | TPPC1, tetraphenylphosphonium chloride purity 98 %, Sigma Aldrich. |

The concentration of catalyst is given in ppm related to the theoretical mass of the employed monomers.

All Chemicals were used as received without further purification.

### IR-spectroscopy analysis

IR-spectroscopic measurements were performed on a Bruker Alpha with diamond crystal. Spectra were recorded with a resolution of 4 cm-1 in the range of 400 to 4000 cm-1 with 24 single measurements. The table below summarizes the vibrations and the wave numbers, respectively, that are detected for oxazolidinone as well as for the starting compounds and common side products. The intensity (absorbance unit) of the peak maximum in the respective wave number area of the signal is used for calculation.

**Table 1: Summary of the IR spectroscopic vibrations and the corresponding wave number for polyoxazolidinone, its monomers, and potential side products.**

| Wave number (cm⁻¹) | Functionality | Vibration |
|---|---|---|
| 905 - 910 | Epoxide | Ring deformation |
| 1410 | Isocyanurate | Ring deformation |
| 1680 - 1730 | Carbamate | C=O Vibration |
| 1710 - 1715 | Isocyanurate | C=O Vibration |
| 1740 - 1760 +/- 10 | Oxazolidinone | C=O Vibration |
| 2260 | Isocyanat | N=C=O Vibration |

### Reactor

The reaction was performed in a 4-neck round bottom flask (500 mL), equipped with a glass reflux condenser, a gas inlet (N2), a syringe pump (IP-SYRDOS2-HP-XLP from SyrDos), a glass inlet tube equipped with a temperature probe (GFX 460 from Ebro) and an overhead KPG agitator (RW20 from IKA). The round bottom flask was heated with a heating mantle from Winkler (WM/BRI/250 with a maximum heating capacity of 120 W) which was connected to the temperature probe with an RB 1691 B-S from Ebro.

For the depolymerization Schlenk round bottom flasks equipped with magnetic stirrer and a gas inlet (N2). The round bottom flask was heated with an aluminium mantle placed on a magnetic stirrer from Heidolph (3001).

### Synthesis

### Example 1: Synthesis of epoxy-terminated oxazolidinone-based composition with TPU (A-I) as compound (A) and BDDE (B) as compound (B-I) using TPPCl (C-II) as compound (C).

A round bottom flask with magnetic stirring was charged with 43.8 g of TPU, 50.0 g (247 mmol) of BDDE and heated to 185 °C under N2 atmosphere. To the mixture, 1.53 g TPPCl was added and the reaction progress was monitored by FTIR spectroscopy. After 120 and 180 min, additional portions of catalyst were added (1.53 g each, overall 4.59 g, 12.24 mmol) TPPCl overall) until there was no further change in the IR-spectrum after ca. 300 min.

### Example 2: Synthesis of hydroxy-terminated oxazolidinone-based composition with TPU (A-I) as compound (A) and Glycerol carbonate (B-III) as compound (B) using K2CO3 (C-I) as compound (C).

A round bottom flask was charged with benzonitrile (331.7 mL) Glycerol carbonate ( 93.4 g, 791 mmol) and K2CO3 (995 mg, 0.007 mmol) and the reaction mixture was heated to 160 °C. TPU (220.0 g, 360 mmol) was slowly added to the reaction mixture within 10 minutes. Immediate gas evolution was observed due to the formation of CO2. The reaction progress was monitored by FTIR spectroscopy. The clear reaction solution was cooled to 25°C after a reaction time of 180 min. The FTIR spectrum of the resulting reaction mixture shows an oxazolidinone : urethane ratio of 2.4 : 1.

### Example 3: Synthesis of hydroxy-terminated oxazolidinone-based composition with TPU (A-I) as compound (A) and Glycerol carbonate (B-III) as compound (B) using K2CO3 (C-I) as compound (C).

A round bottom flask was charged with benzonitrile (151.7 mL) and K2CO3 (498 mg, 0.004 mmol) and the reaction mixture was heated to 160 °C. TPU (110.2 g, 180 mmol) and Glycerol carbonate ( 45.5 g, 360 mmol) were slowly added to the reaction mixture within 30 minutes. Immediate gas evolution was observed due to the formation of CO2. The reaction progress was monitored by FTIR spectroscopy. The clear reaction solution was cooled to 25°C after a reaction time of 180 min. The FTIR spectrum of the resulting reaction mixture shows an oxazolidinone : urethane ratio of 3.1 : 1.

### Example 4: Synthesis of hydroxy-terminated oxazolidinone-based composition with RF (A-II) as compound (A) and Glycerol carbonate (B-III) as compound (B) using K2CO3 (C-I) as compound (C).

A round bottom flask was charged with diethylene glycol (50.0 g) and was heated to 185°C. K2CO3 (1.05 g, 0.008 mmol) was added followed by the slow addition of grinded RF (44.9 g, 380 mmol) within 3 h resulting in a brown, clear solution. Glycerol carbonate ( 20.6 g, 360 mmol) was slowly added to the reaction mixture within 2 h. Immediate gas evolution was observed due to the formation of CO2. The reaction progress was monitored by FTIR spectroscopy. The reaction mixture was stirred for additionally 2h at 185°C and subsequently cooled to 25°C after. The FTIR spectrum of the resulting reaction mixture shows complete conversion of the urethane to oxazolidinone (oxazolidinone : urethane >10:1).

### Example 5: Synthesis of epoxy-terminated oxazolidinone-based composition with RF (A-11) as compound (A) and BDDE (B) as compound (B-I) using TPPCl (C-II) as compound (C).

A round bottom flask with magnetic stirring was charged with 10.0 g (49.4 mmol) of BDDE and heated to 185 °C under N2 atmosphere. After addition of 0.461 g TPPCl, RF was added in small portions until the foam dissolved in the BDDE (2.50 g RF overall). The reaction progress was monitored by FTIR spectroscopy. After 85 and 150 min, additional portions of catalyst were added (0.461 g each, overall 1.38 g, 3.68 mmol) TPPCl overall) until there was no further change in the IR-spectrum after ca. 300 min.

### Example 6: Synthesis of epoxy-terminated oxazolidinone-based composition with PIR foam (A) as compound (A-III) and BDDE (B) as compound (B-I) using TPPCl (C-II) as compound (C).

A round bottom flask (50 mL) with magnetic stirring was charged with 10.0 g (49.4 mmol) of BDDE and heated to 185 °C under N2 atmosphere. After addition of 0.307 g TPPCl, PIR foam was added in small portions until the foam dissolved in the BDDE (3.42 g PIR foam overall). The reaction progress was monitored by FTIR spectroscopy. After 50, 100 and 180 min, additional portions of TPPCl were added (0.307 g each portion, overall 1.23 g, 3.28 mmol) until there was no further change in the IR-spectrum after ca. 300 min.

**Table 2: Comparison of the results of Examples 1 to 6:**

| *E x.* | *A* | *B* | *C* | | *A* | *A* | *A* | *IR OXA* / *IR Urethane ratio* |
|---|---|---|---|---|---|---|---|---|
| | | | | | *PU group* | *PIR group* | *Iso group* | |
| *1* | *TPU* | *BDDE* | *TPPCl* | *Batch* | *Yes* | *No* | *No* | *2*/*1* |
| *2* | *TPU* | *GC* | *K₂CO₃* | *Batch* | *Yes* | *No* | *No* | *2.4*/*1* |
| *3* | *TPU* | *GC* | *K₂CO₃* | *Semi-batch* | *Yes* | *No* | *No* | *3.1*/*1* |
| *4* | *RF PU* | *GC* | *K₂CO₃* | *Semi-batch* | *Yes* | *No* | *No* | *>10*/*1* |
| *5* | *RF PU* | *BDDE* | *TPPCl* | *Batch* | *Yes* | *No* | *No* | *3*/*1* |
| *6* | *PIR* | *BDDE* | *TPPCl* | *Batch* | *Yes* | *Yes* | *No* | *2*/*1* |

The examples show that all polymers could be decomposed into reactive oxazolidinone-containing precursors with low molecular weight.

## Claims

1. A process for producing an oxazolidinone composition comprising the reaction of a compound (A) with a compound (B) in the presence of a catalyst (C),
wherein the compound (A) contains three or more urethane-groups (A-1) and/or at least one isocyanurate-group (A-2), preferably urethane-groups (A-1),
wherein the compound (A) is free of isocyanate groups,
and wherein the compound (B) is a mono- or polyepoxide compound (B-1) with two or more epoxy groups and/or glycidol (B-2) and/or glycerol carbonate (B-3).

2. The process according to claim 1, wherein the catalyst (C) is present in a weight amount of 0.01-20 mol%, preferably of 0.1 to 5 mol%, more preferably ≥ 0.3 to ≤ 4 mol%, based on the total weight of compound (A) and is a Lewis- and/or Bronsted base, preferably a substituted or non-substituted ammonium halide, a substituted or non-substituted phosphonium halide, an amine, a metal hydroxide, a metal carbonate, a metal alkoxide, a metal acetate, a metal formiate, a metal molybdate, a metal vanadate and/or a metal phosphate.

3. The process according to claim 1 or 2, wherein the compound (A) is a foam or a compact or an elastic material.

4. The process according to any one of claims 1 to 3, wherein the compound (A) is a flexible, rigid or viscoelastic foam.

5. The process according to any one o claims 1 to 4, wherein the compound (A) is a compact material and the compact material is a thermoplastic polyurethane or a polyurethane elastomer.

6. The process according to any one of claims 1 to 5, wherein compound (A) is a polyester polyurethane or a polyether polyurethane.

7. The process according to any one of claims 1 to 6, wherein the polyurethane is obtained using an isocyanate component comprising aromatic polyisocyanates.

8. The process according to any one of claims 1 to 4, wherein compound (A) comprises at least three isocyanurate groups.

9. The process according to any one of claims 1 to 8, wherein the compound (B) is the polyepoxide compound (B-1).

10. The process according to claim 9, wherein compounds (A) and (B) are used in a molar ratio of 1 to 2, more preferably 1 to 1,2.

11. The process according to any one of claims 1 to 8, wherein the compound (B) is glycidol (B-2) and/or glycerol carbonate (B-3).

12. A polyoxazolidinone obtained or obtainable according to the process of claim 9 or 10.

13. The polyoxazolidinone according to claim 12 having a number average molecular weight between 300 g/mol and 2000 g/mol, as measured with the method described in the description.

14. A hydroxyl-group terminated oxazolidinone obtained or obtainable according to claim 11, 12 or 13.

15. The hydroxyl-group terminated oxazolidinone according to claim 16, wherein the molar ratio of the 4-hydroxymethyl substituted 1,3-oxazolidin-2-one regioisomer to the 5-hydroxymethyl substituted 1,3-oxazolidin-2-one regioisomer is > 0,0 to 1 to ≤100,0 to 1, preferably ≥ 0,1 to ≤20,0 to 1 and more preferably ≥ 0,2 to 1 to ≤5,0 to 1.
